# EUROPEAN PATENT SPECIFICATION

(11) **EP 0 396 705 B1**
(45) Date of publication and mention of the grant of the patent: **30.06.1993**
(21) Application number: 89912542.1
(22) Date of filing: 10.10.1989
(51) Int. Cl.: G02B 6/44, B65H 55/04

(54) **METHOD AND APPARATUS FOR WINDING FLAT COILS OF FILAMENTARY MATERIALS SUCH AS OPTICAL FIBERS**
VERFAHREN UND VORRICHTUNG ZUM AUFWICKELN FLACHER WICKEL AUS FADENFÖRMIGEM MATERIAL WIE OPTISCHE FÄDEN
APPAREIL ET PROCEDE PERMETTANT D'ENROULER DES MATERIAUX FILIFORMES, TELS QUE DES FIBRES OPTIQUES, EN BOBINES PLATES

(30) Priority: 15.11.1988 US 271476
(43) Date of publication of application: 14.11.1990
(73) Proprietor: Hughes Aircraft Company, Los Angeles, California 90045-0066 (US)
(72) Inventor: HU, William, C., Chatsworth, CA 91311 (US); HSU, Hui-Pin, Northridge, CA 91325 (US)
(74) Representative: Colgan, Stephen James
(86) International application number: US8904374
(87) International publication number: WO9005928

(56) References cited:
- US-A- 3 607 560
- US-A- 3 772 119
- US-A- 3 989 578

## Description

### BACKGROUND OF THE INVENTION

### 1. Field of the Invention

The present invention relates generally to the winding of filamentary materials into a spool, and, more particularly, to a method and apparatus for the winding of filamentary materials into a tandem stack of flat coils.

### 2. Description of Related Art

There are many situations in which it is necessary to unwind from a prefabricated spool, an extended length of either a metal wire or an optical fiber at a rapid rate and in such a manner as not to crimp, distort or over-stress the filamentary material. For example, certain present-day missiles include a stored spool of an optical fiber which, upon launching of the missile, is paid out and remains interconnected with the launching station. The target scene information and the missile guidance commands are transmitted via the fiber data link for the entire or portion of the missile travel. See, for example , U.S. Patent 4860968. Conventional cylindrical layered windings such as typically encountered in the winding of transformers or in the textile industry, for example, are not fully satisfactory for optical fibers and are accompanied with several difficulties in use. For example, on rapid payout of an optical fiber from a conventional spool, such as illustrated in U.S. Patent 4326657, which is cylindrically wound, there is a high lateral friction drag which produces heat and possible damage to the fiber resulting in the fiber data link failure or undesirable optical signal modulation. Also, during shelf storage or temperature cycling, the winding pattern may collapse or slump which can prevent a smooth payout operation. Still further, there is an inherent requirement in cylindrical layered winding of fiber crossover areas between the layers, and this produces what is referred to as "micro-bending" resulting in added optical signal loss.

### SUMMARY OF THE INVENTION

It is a primary object and aim of the present invention to provide method and apparatus for simultaneously making a pair of flat coils from a single optical fiber. Such apparatus is defined in claim 8.

The invention also provides a method of winding a flat coil assembly as defined in claim 1 , and a flat coil assembly as defined in claim 6.

### DESCRIPTION OF THE DRAWINGS

FIG. 1 is a perspective view of apparatus for winding flat coils in accordance with this invention.

FIGS. 2A and 2B depict a side elevational, sectional view of the flat coil winding apparatus of FIG. 1.

FIG. 3 is a side elevational view of a cylindrically layered coil showing micro-bending.

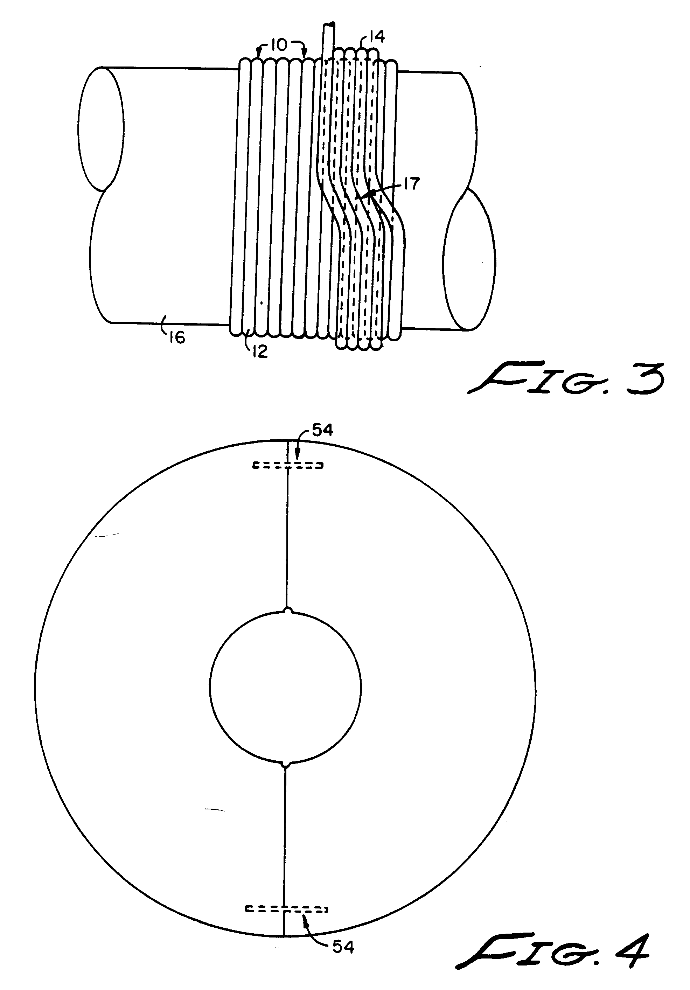

FIG. 4 is a side elevational view of a split guide plate.

### DESCRIPTION OF A PREFERRED EMBODIMENT

There are a number of situations in which an optical fiber or a metal wire must be paid out very rapidly from a spool upon which it is wound. For example, in certain missiles an optical fiber interconnects the missile with the launch terminal, which may be aboard a ship, an aircraft or ground based. When the missile is fired, a continuous optical signal data link is provided by the optical fiber which is allowed to pay out from a spool in the missile. In this manner, target tracking and guidance computation can be accomplished at the terminal and command instructions can be given over the optical fiber thereby obviating the necessity for including all the complex computing and tracking equipment on board the missile.

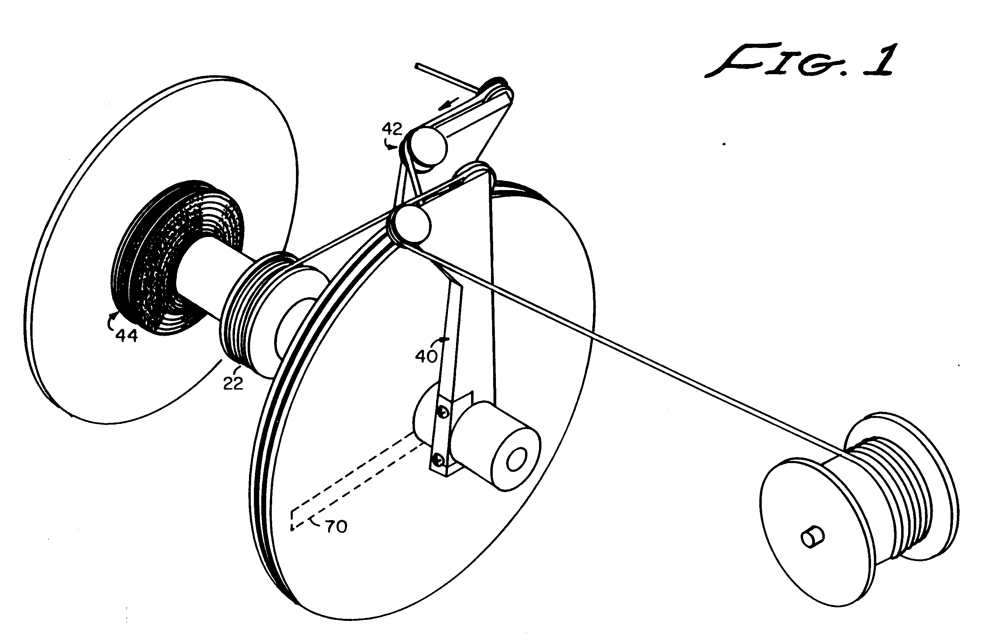

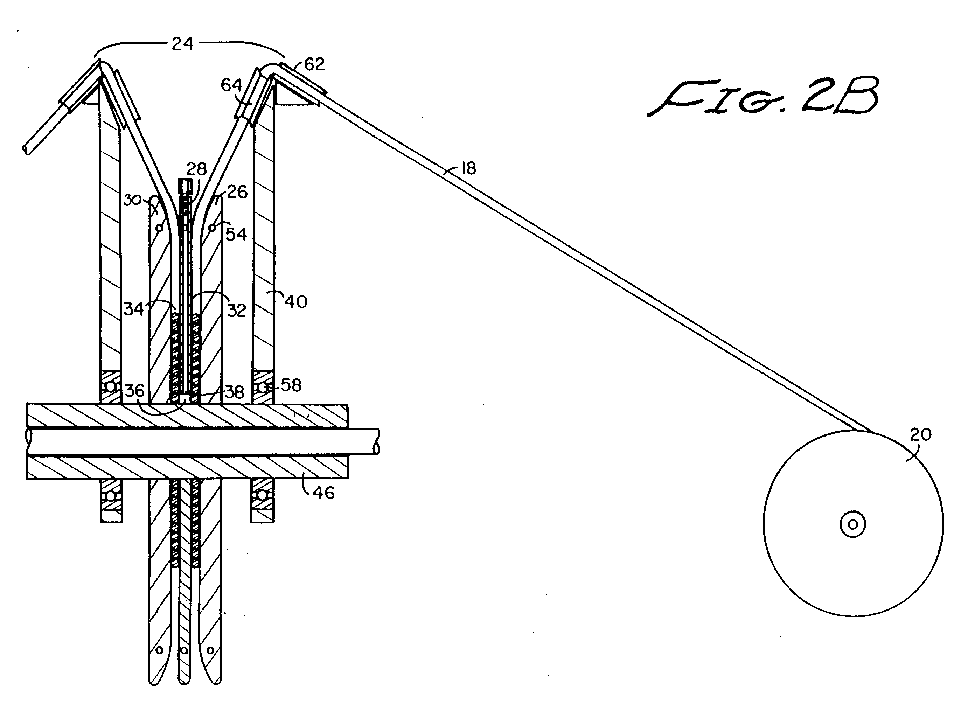

Although the described method of winding and apparatus for practicing the method are useful for winding all kinds of filamentary materials, they are especially advantageous when applied to winding optical fibers and will be described particularly in that connection here. With reference now to FIG. 3 of the drawings there is shown a conventional cylindrical layered coil 10 which is seen to include, for descriptive purposes only, two layers 12 and 14 of optical fibers, the layer 12 being helically wound to form a cylindrical layer on the outer surface of a cylindrical bobbin 16, for example, and the second layer 14 being similarly wound over the first layer. In actual practice, of course, and depending upon the total length of the fiber, there may be many such layers. Assuming that a fiber were to be paid out from the right end of the bobbin, as shown in FIG. 1, each loop from the outer-most layer, as the peel point progresses to the left, would be exposed to contacting part or all of the underlying winding layer as it moves therepast. This frictional contact produces a drag upon the fiber which can damage or deform the fiber, thus adversely affecting its optical signal transmission characteristics.

A further difficulty with cylindrical layered winding, sometimes referred to as "micro-bending", is the bending of the fiber as a result of overlaying a foreward-helix outer layer onto a backward-helix underlying layer. These micro-bendings can accumulate significant signal loss which degrades signal transmission along the fiber. The micro-bending of the fiber is enumerated as 17, and the bends for adjacent loops are shown immediately adjacent to each other as, in practice, this is done to achieve maximum density winding.

The cylindrical layered windings also exhibit a tendency to collapse or slump during extended shelf storage or in circumstances where there are substantial temperature changes. This is undesirable and can cause the fibers of adjacent layers to be intermixed with one another to the extent that payout may be interrupted.

To avoid the disadvantages of cylindrical layered coils, it is fundamental to the present invention to wind the optical fiber in a flat-coil configuration, or, more precisely, a series of flat coils wound from a single continuous fiber. A flat coil consists essentially of winding each fiber loop on top of a previous loop, forming a disk-like coil that is one fiber diameter thick.

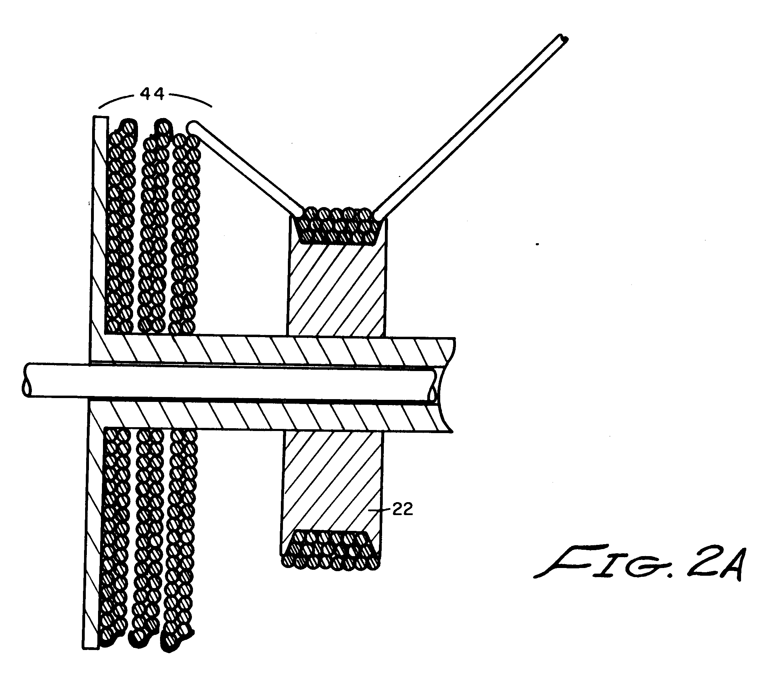

For the ensuing description of the method and apparatus of the present invention, reference is now made to FIGS. 1, 2A and 2B. The first step constitutes removing a length of optical fiber 18 from a fiber supply spool 20 that is equal to the amount of fiber to form one flat coil and storing this amount on a temporary takeup spool 22. Without reference to details at this time, the coil forming apparatus 24 includes three guide plates 26, 28 and 30, located on a common shaft and separated so as to form two winding spaces 32 and 34, each slightly wider than the diameter of the optical fiber. The end point 36 of the temporarily stored fiber is positioned in an opening 38 of the central guide plate 28.

Two flat coils are wound simultaneously. One is taken from the temporary storage spool 22 and the second is wound directly off the fiber supply spool 20. More particularly, two fiber winding devices 40 and 42 rotate in opposite directions to form a first flat coil in the space between guide plates 26 and 28 and a second flat coil between guide plates 28 and 30, respectively. By winding the coils in opposite directions the inner-connecting fiber located in the center guide opening 38 has not been subjected to a sharp bend. Upon completion of the fabrication of the two adjacent flat coils, the guide plates are removed, the coils sprayed or otherwise provided with a light coat of adhesive and the two coils are then moved or slid to the end of the winding spool where they are stacked in tandem in a side-by-side relation to previously made coils 44.

With particular reference to FIGS. 1 and 2B, the winding framework defining the flat coils consists of three generally circular plates 26, 28 and 30 which are arranged parallel to one another and are secured together in a unitary relationship on a hollow cylindrical shaft 46. The plates are each constructed of two semicircular parts which are fitted together and secured with pins 54 located within openings in the guide plates. The three guide plates are so spaced apart along the shaft as to provide a winding space 32 between guide plates 26 and 28 and a further winding space 34 between plates 28 and 30. Each winding space 32 or 34 is of a width slightly exceeding the diameter of the fiber 18. The edge portions of plates 26 and 30 facing toward one another are beveled to provide a smooth surface for guiding the fiber during winding as will be described.

The fiber winding devices 40 and 42 are identical to each other and, therefore, only the device 40 will be described in detail. The device 40 is an elongated rotary member of total length slightly greater than the radius of a guide plate (FIG. 1). A ball bearing 58 in one end of the member 40 is fitted onto the shaft 46 for rotation about the shaft just outwardly of guide plate 26. The upper end portion of the device has a first grooved pulley 62 mounted on the device outwardly facing side and a second grooved pulley 64 mounted on the device side facing the guide plates. Drive motors (not shown) are operatively connected to rotate the device 40 in a predetermined direction, e.g., clockwise as depicted in FIG. 1. The device 42 is identically constructed to device 40 except that it will be rotated oppositely (e.g., counterclockwise as shown in FIG. 1).

As a first step in using the described apparatus, a length of optical fiber 18 is pulled off the supply spool 20 equal to that amount necessary to form one flat coil and temprarily wound onto the takeup spool 22 with the fiber also being placed around the grooved pulleys 62 and 64 of both fiber winding devices 40 and 42. The point on the fiber 18 defining the inner end point 36 of the one flat coil amount that has been temporarily stored on the takeup spool is then located through opening 38 in the central guide plate 28. All three guide plates 26, 28 and 30 are now mounted onto shaft 46 (FIG. 2B) and located in place by pins 54.

Next, the winding devices 40, 42 are rotated in opposite directions a sufficient number of turns until two flat coils are completed: one in the space 32 between guide plates 26 and 28, and a second in space 34 between plates 28 and 30. The pins 54 are withdrawn, the two flat coils covered (e.g., by spraying) with a light coat of adhesive, and the coils are slid along shaft 46 to a storage position 44 (FIG. 2A). The process is repeated until the required number of flat coils are obtained.

There is provided in accordance with this invention a method and apparatus for forming a coil assembly from a single continuous optical fiber consisting of a tandem stack of flat coils in which the fiber portion interconnecting adjacent flat coils is not subjected to any stretching or bending. The fiber of such a coil assembly upon payout is only subjected to adhesive drag between the fiber and the winding immediately below. The flat coils do not experience undesirable stresses or friction and the fiber is not subject to micro-bending.

Although other adhesives may be found satisfactory for maintaining a fiber coil dimensioned integrity while forming a multiple coil assembly, excellent results have been obtained with a blend of silicon adhesives. In addition to applying the adhesive to the coils after removal of the plates one at a time, slots or cutouts 70 can be provided in each plate 26 and 30 through which the adhesive may be applied prior to the guide plate removal.

Although several somewhat preferred embodiments have been disclosed and described in detail herein, it should be understood that this invention is in no sense limited thereby and its scope is to be determined by that of the appended claims.

## Claims

1. A method of winding a coil assembly from a filament supply (20), said coil assembly including at least two flat coils, each flat coil consisting of a plurality of concentric, radially adjacent filament loops, defining a disk-like coil which is one filament diameter thick, comprising the steps of:
removing a length of filament (18) from the supply (20) sufficient to wind one flat coil;
winding the removed length of filament in a first direction to form a first flat coil; and
winding a second flat coil of filament (18) taken from the supply (20) in the opposite direction to that of the first flat coil.

2. A method as in claim 1, in which the first and second coils are wound simultaneously.

3. A method as in claim 1 or in claim 2, in which the length of filament removed from the supply is stored on a takeup spool (22) prior to being wound into the first coil.

4. A method as in claim 3 comprising the steps of:
locating three platelike guides (26,28,30) in a mutually facing spaced apart relation to form first (32) and second (34) winding spaces, the central guide (28) having an opening (38) therein;
passing the end of the filament through the central guide opening (38);
pulling a length of filament off the supply (20) sufficient to wind one flat coil, passing it through the central guide opening (38) and temporarily storing the length of filament on the takeup spool (22);
winding filament from the supply (20) in the first winding space (32) to form the first coil;
simultaneously winding the takeup spool filament in the second winding space (34) to form the second flat coil; and
removing the platelike guides (26,28,30).

5. A method as in claim 4, including the further step of applying adhesive to the first and second flat coils.

6. A flat coil assembly, comprising:
at least two flat coils formed from a single continuous filament arranged with coil major surfaces facing one another and the direction of winding being different for the two coils, each flat coil consisting of a plurality of concentric, radially adjacent filament loops, defining a disk-like coil which is one filament diameter thick,

7. A flat coil assembly as in claim 6, in which a quantity of adhesive is applied to each coil unitarily relating the turns of each coil to one another.

8. Apparatus for simultaneously winding a pair of flat coils from a single filament (18) comprising:
a shaft (46);
three platelike means (26,28,30) each having a central opening received on the shaft (46) with the two outer platelike means (26,30) being spaced from the central platelike means (28) to define first (32) and second (34) winding spaces, each winding space being slightly wider than the filament diameter, the central platelike means (28) having a second opening (38) closely adjacent the shaft (46);
first filament winding means (40) for winding a length of the filament into the first winding space (32), and
second filament winding means (42) for winding a further filament length into the second winding space (34), said first (40) and second (42) filament winding means being adapted to form flat coils wound in opposite directions.

9. Apparatus as in claim 8, in which the platelike means (26,28,30) are formed in separable parts.

10. Apparatus as in claim 9, in which the separable parts of each platelike means are releasably secured together by a removable pin (54).

11. Apparatus as in any one of claims 8-10, in which the winding means (40;42) each include an elongated member having one end journaled to the shaft (46) for rotating thereabout.

## Patentansprüche

1. Verfahren zum Wickeln einer Spulenanordnung von einer Fadenzufuhr (20), wobei die Spulenanordnung wenigsten zwei Flachspulen enthält, und jede Flachspule aus einer Vielzahl von konzentrischen, radial aneinandergrenzenden Fadenwindungen besteht, die eine scheibenartige Spule bilden, die einen Fadendurchmesser dick ist, das die folgenden Schritte umfaßt:
Entnahme eines Fadenabschnittes (18) von der Zufuhr (20), der ausreicht, um eine Flachspule zu wickeln;
Wickeln des entnommenen Fadenabschnittes in einer ersten Richtung zur Herstellung einer ersten Flachspule; und
Wickeln einer zweiten Flachspule aus Faden (18), der von der Zufuhr (20) entnommen wird, in der Richtung, die der ersten Flachspule entgegengesetzt ist.

2. Verfahren nach Anspruch 1, bei dem die erste und die zweite Spule gleichzeitig gewickelt werden.

3. Verfahren nach Anspruch 1 oder Anspruch 2, bei dem der von der Zufuhr entnommene Fadenabschnitt auf einer Aufnahmespule (22) aufgewickelt wird, bevor er zur ersten Spule gewickelt wird.

4. Verfahren nach Anspruch 3, das die folgenden Schritte umfaßt:
Anbringen von drei scheibenartigen Führungen (26, 28, 30) in einander zugewandter, beabstandeter Beziehung, die einen ersten (32) und einen zweiten (34) Wickelzwischenraum bilden, wobei die mittlere Führung (28) eine Öffnung (38) aufweist;
Führen des Endes des Fadens durch die mittlere Führungsöffnung (38);
Abziehen eines Fadenabschnittes von der Zufuhr (20), der ausreicht, um eine Flachspule zu wickeln, und Führen desselben durch die mittlere Führungsöffnung (38) und zeitweiliges Aufwikkeln des Fadenabschnitts auf die Aufnahmespule (22);
Wickeln von Faden von der Zufuhr (20) in den ersten Wickelzwischenraum (32) zur Herstellung der ersten Spule;
gleichzeitiges Wickeln des Aufnahmespulenfadens in den zweiten Wickelzwischenraum (34) zur Herstellung der zweiten Flachspule; und
Entfernung der scheibenartigen Führungen (26, 28, 30).

5. Verfahren nach Anspruch 4, das den weiteren Schritt des Auftragens von Klebstoff auf die erste und die zweite Flachspule enthält.

6. Flachspulenanordnung, die umfaßt:
wenigstens zwei Flachspulen, die aus einem einzelnen Endlosfaden gebildet werden, wobei die Hauptflächen der Spulen einander zugewandt sind, und die Wicklungsrichtungen der beiden Spulen unterschiedlich sind, und jede Flachspule aus einer Vielzahl von konzentrischen, radial aneinandergrenzenden Fadenwindungen besteht, die eine scheibenartige Spule bilden, die einen Fadendurchmesser dick ist.

7. Flachspulenanordnung nach Anspruch 6, bei der eine Menge Klebstoff auf jede Spule aufgetragen wird, die die Windungen jeder Spule als Einheit miteinander verbindet.

8. Vorrichtung zum gleichzeitigen Wickeln eines Paares von Flachspulen aus einem einzelnen Faden (18), die umfaßt:
eine Welle (46);
drei scheibenartige Einrichtungen (26, 28, 30), die jeweils eine Mittelöffnung haben, die die Welle (46) aufnimmt, wobei die beiden äußeren scheibenartigen Einrichtungen (26, 30) von der mittleren scheibenartigen Einrichtung (28) beabstandet sind und einen ersten (32) und einen zweiten (34) Wickelzwischenraum bilden, wobei jeder Wickelzwischenraum etwas breiter ist als der Fadendurchmesser, und wobei die mittlere scheibenartige Einrichtung (28) eine zweite Öffnung (38) hat, die nahe an die Welle (46) angrenzt;
eine erste Fadenwickeleinrichtung (40) zum Wickeln eines Abschnittes des Fadens in den ersten Wickelzwischenraum (32); und
eine zweite Fadenwickeleinrichtung (42) zum Wickeln eines weiteren Fadenabschnittes in den zweiten Wickelzwischenraum (34), wobei die erste (40) und die zweite (42) Fadenwickeleinrichtung in einander entgegengesetzte Richtungen gewickelte Flachspulen erzeugen.

9. Vorrichtung nach Anspruch 8, bei der die scheibenartigen Einrichtung (26, 28, 30) in trennbaren Teilen ausgebildet sind.

10. Vorrichtung nach Anspruch 9, bei der die trennbaren Teile jeder scheibenartigen Einrichtung durch einen entfernbaren Stift (54) lösbar aneinander befestigt sind.

11. Vorrichtung nach einem der Ansprüche 8 - 10, bei der die Wickeleinrichtungen (40, 42) jeweils ein längliches Element enthalten, dessen eines Ende auf der Welle (46) um selbige drehbar gelagert ist.

## Revendications

1. Procédé de bobinage d'un ensemble de rouleaux à partir d'une alimentation (20) en filament, ledit ensemble de rouleaux comprenant au moins deux rouleaux plats, chaque rouleau plat étant constitué de plusieurs boucles de filament concentriques, radialement adjacentes, définissant un rouleau analogue à un disque qui est de l'épaisseur d'un diamètre de filament, comprenant les étapes qui consistent :
à enlever une longueur de filament (18) de l'alimentation (20) suffisante pour bobiner un rouleau plat ;
à bobiner la longueur de filament enlevée dans un premier sens pour former un premier rouleau plat ; et
à bobiner un second rouleau plat de filament (18) prélevé de l'alimentation (20), dans le sens opposé à celui du premier rouleau plat.

2. Procédé selon la revendication 1, dans lequel les premier et second rouleaux sont enroulés simultanément.

3. Procédé selon la revendication 1 ou la revendication 2, dans lequel la longueur de filament enlevée de l'alimentation est emmagasinée sur une bobine réceptrice (22) avant d'être bobinée pour former le premier rouleau.

4. Procédé selon la revendication 3, comprenant les étapes qui consistent :
à placer trois guides (26, 28, 30) analogues à des plaques dans une disposition mutuellement face à face et espacée pour former des premier (32) et second (34) espaces de bobinage, le guide central (28) présentant une ouverture (38) ;
à faire passer l'extrémité du filament dans l'ouverture (38) du guide central ;
à tirer une longueur de filament de l'alimentation (20), suffisante pour bobiner un rouleau plat, à la faire passer dans l'ouverture (38) du guide central et à emmagasiner temporairement la longueur de filament sur la bobine réceptrice (22) ;
à bobiner le filament provenant de l'alimentation (20) dans le premier espace (32) de bobinage pour former le premier rouleau ;
à bobiner simultanément le filament de la bobine réceptrice dans le second espace (34) de bobinage pour former le second rouleau plat ; et
à enlever les guides (26, 28, 30) analogues à des plaques.

5. Procédé selon la revendication 4, comprenant en outre l'étape qui consiste à appliquer un adhésif aux premier et second rouleaux plats.

6. Ensemble de rouleaux plats, comportant :
au moins deux rouleaux plats formés à partir d'un seul filament continu disposé de façon que des surfaces principales des rouleaux soient face à face et que le sens de bobinage soit différent pour les deux rouleaux, chaque rouleau plat étant constitué de plusieurs boucles de filament concentriques, radialement adjacentes, définissant un rouleau analogue à un disque qui est de l'épaisseur d'un diamètre de filament.

7. Ensemble de rouleaux plats selon la revendication 6, dans lequel une quantité d'adhésif est appliquée à chaque rouleau, liant les spires de chaque rouleau les unes aux autres.

8. Appareil pour bobiner simultanément deux rouleaux plats à partir d'un filament unique (18), comportant :
un arbre (46) ;
trois moyens (26, 28, 30) analogues à des plaques ayant chacun une ouverture centrale, reçus sur l'arbre (46), les deux moyens extérieurs (26, 30) analogues à des plaques étant espacés du moyen central (28) analogue à une plaque pour définir des premier (32) et second (34) espaces de bobinage, chaque espace de bobinage étant d'une largeur légèrement supérieure au diamètre du filament, le moyen central (28) analogue à une plaque présentant une seconde ouverture (38) étroitement adjacente à l'arbre (46) ;
un premier moyen (40) de bobinage de filament destiné à bobiner une longueur de filament dans le premier espace de bobinage (32) ; et
un second moyen (42) de bobinage de filament destiné à bobiner une autre longueur de filament dans le second espace de bobinage (34), lesdits premier (40) et second (42) moyens de bobinage de filament étant conçus pour former des rouleaux plats bobinés dans des sens opposés.

9. Appareil selon la revendication 8, dans lequel les moyens (26, 28, 30) analogues à des plaques sont formés en trois pièces pouvant être séparées.

10. Appareil selon la revendication 9, dans lequel les pièces pouvant être séparées de chaque moyen analogue à une plaque sont fixées de façon amovible les unes aux autres par une goupille amovible (54).

11. Appareil selon l'une quelconque des revendications 8 à 10, dans lequel les moyens de bobinage (40 ; 42) comprennent chacun un élément allongé ayant une extrémité qui tourillonne sur l'axe (46) pour tourner autour de lui.
